# EUROPEAN PATENT APPLICATION

(11) **EP 4 711 900 A1**
(43) Date of publication of application: **18.03.2026**
(21) Application number: 25189301.2
(22) Date of filing: 14.07.2025
(51) Int. Cl.: G06F 3/02, G06F 3/039, G06F 3/04886, G06F 1/16, G06F 3/044

(54) **KEYBOARD DEVICE AND INFORMATION APPARATUS SYSTEM**

(30) Priority: 13.09.2024 JP 2024158954; 13.12.2024 JP 2024218797
(71) Applicant: Lenovo Japan LLC, Tokyo (JP)
(72) Inventor: YANG, Xueyong, 220-0012 Yokohama-shi (JP); XIAO, Limin, 220-0012 Yokohama-shi (JP); SUGIYAMA, Muneki, 220-0012 Yokohama-shi (JP); FUJII, Kazuo, 220-0012 Yokohama-shi (JP)
(74) Representative: Openshaw & Co.

(57) **Abstract**

The present invention provides a keyboard device and an information apparatus system that can be made thinner and lighter and achieve a high degree of operability. The keyboard device is a keyboard device for providing an input to a screen keyboard displaying a plurality of keys on a capacitive touch screen, the device including a plurality of conductive keycaps, scissors mechanisms respectively provided directly beneath the respective keycaps and configured to support the keycap to be vertically movable, an insulating support plate having respective through holes directly beneath the respective keycaps and configured to support each scissors mechanism on an upper surface side, rubber domes respectively provided between the respective keycaps and the support plate, and having a conductive contact portion contacting the keycap, and a conductive pressing portion being in electrical connection with the contact portion and passing through the through hole when the keycap is pressed, and a plurality of conductive pads provided on a lower surface side of the support plate to respectively cover the respective through holes in a state in which adjacent conductive pads are isolated from each other, and that are respectively able to be in electrical connection with the respective keys of the screen keyboard.

## Description

### BACKGROUND OF THE INVENTION

### Field of the Invention

The present invention relates to a keyboard device and an information apparatus system.

### Description of the Related Art

In recent years, information apparatuses such as laptop PCs and tablet PCs, which have a touch screen and do not have a physical keyboard, have rapidly become popular. Such an information apparatus often uses a screen keyboard displayed on a touch screen as a virtual input device (for example, see Japanese Unexamined Patent Application Publication No. 2018-10512).

### SUMMARY OF THE INVENTION

By the way, on-screen keyboards do not provide physical up and down movement of the keys or input feedback, and it is not possible to tactilely distinguish the boundaries between adjacent keys. Therefore, screen keyboards are not as good as physical keyboard devices in terms of operability, and some users may prefer to input with a physical keyboard device.

Therefore, the applicant has proposed a compact keyboard device that can be placed on the touch screen of information apparatuses such as those mentioned above and can be connected to the information apparatuses wirelessly (see Japanese Unexamined Patent Application Publication No. 2022-74796). This keyboard device has keys that physically move up and down, providing a high degree of operability. However, because this keyboard device is equipped with a battery, a membrane switch, a wireless module, and the like, there is a limit to how thin and lightweight the keyboard can be.

The present invention has been made in view of the above-described problems, and an object of the present invention is to provide a keyboard device and an information apparatus system that can be made thinner and lighter and achieve a high degree of operability.

A keyboard device according to a first aspect of the present invention is a keyboard device for providing an input to a screen keyboard displaying a plurality of keys on a capacitive touch screen, the device including a plurality of conductive keycaps, scissors mechanisms respectively provided directly beneath the respective keycaps and configured to support the keycap to be vertically movable, an insulating support plate having respective through holes directly beneath the respective keycaps and configured to support each scissors mechanism on an upper surface side, rubber domes respectively provided between the respective keycaps and the support plate, and having a conductive contact portion contacting the keycap, and a conductive pressing portion being in electrical connection with the contact portion and passing through the through hole when the keycap is pressed, and a plurality of conductive pads provided on a lower surface side of the support plate to respectively cover the respective through holes in a state in which adjacent conductive pads are isolated from each other, and that are respectively able to be in electrical connection with the respective keys of the screen keyboard.

An information apparatus system according to a second aspect of the present invention includes an information apparatus having a capacitive touch screen capable of displaying a screen keyboard composed of a plurality of keys, and a keyboard device placed on the touch screen for providing an input to the screen keyboard, in which the keyboard device has a plurality of conductive keycaps, scissors mechanisms respectively provided directly beneath the respective keycaps and configured to support the keycap to be vertically movable, an insulating support plate having respective through holes directly beneath the respective keycaps and configured to support each scissors mechanism on an upper surface side, rubber domes respectively provided between the respective keycaps and the support plate, and having a conductive contact portion contacting the keycap, and a conductive pressing portion being in electrical connection with the contact portion and passing through the through hole when the keycap is pressed, and a plurality of conductive pads provided on a lower surface side of the support plate to respectively cover the respective through holes in a state in which adjacent conductive pads are isolated from each other, and that are respectively able to be in electrical connection with the respective keys of the screen keyboard.

A keyboard device according to a third aspect of the present invention is a keyboard device for providing an input to a screen keyboard displaying a plurality of keys on a capacitive touch screen, the device including a plurality of conductive keycaps, scissors mechanisms respectively provided directly beneath the respective keycaps and configured to support the keycap to be vertically movable, an insulating support plate having respective through holes directly beneath the respective keycaps and configured to support each scissors mechanism on an upper surface side, a plurality of rubber domes, each having a conductive contact portion capable of contacting the keycap, a conductive pressing portion being in electrical connection with the contact portion and passing through the through hole when the keycap is pressed, and a leg portion standing upright on the upper surface side of the support plate, in which the contact portion and the pressing portion are formed of a conductive material, and the leg portion is formed of a non-conductive rubber material, and a plurality of conductive pads provided on a lower surface side of the support plate to respectively cover the respective through holes in a state in which adjacent conductive pads are isolated from each other, and that are respectively able to be in electrical connection with the respective keys of the screen keyboard.

An information apparatus system according to a fourth aspect of the present invention includes an information apparatus having a capacitive touch screen capable of displaying a screen keyboard composed of a plurality of keys, and a keyboard device placed on the touch screen and providing input to the screen keyboard, in which the keyboard device has a plurality of conductive keycaps, scissors mechanisms respectively provided directly beneath the respective keycaps and configured to support the keycap to be vertically movable, an insulating support plate having respective through holes directly beneath the respective keycaps and configured to support each scissors mechanism on an upper surface side, a plurality of rubber domes, each having a conductive contact portion capable of contacting the keycap, a conductive pressing portion being in electrical connection with the contact portion and passing through the through hole when the keycap is pressed, and a leg portion standing upright on the upper surface side of the support plate, in which the contact portion and the pressing portion are formed of a conductive material, and the leg portion is formed of a non-conductive rubber material, and a plurality of conductive pads provided on a lower surface side of the support plate to respectively cover the respective through holes in a state in which adjacent conductive pads are isolated from each other, and that are respectively able to be in electrical connection with the respective keys of the screen keyboard.

According to the above-mentioned aspect of the present invention, a keyboard device and an information apparatus system can be made thinner and lighter, and a high degree of operability can be achieved.

### BRIEF DESCRIPTION OF THE DRAWINGS

FIG. 1 is a configuration diagram of an information apparatus system according to an embodiment.
FIG. 2 is a schematic plan view of the information apparatus system in which a keyboard device is placed on an information apparatus.
FIG. 3A is a schematic side view of the information apparatus in closed storage mode.
FIG. 3B is a side view of the information apparatus shown in FIG. 3A in an open laptop mode, with the keyboard device placed at a use position.
FIG. 4A is a schematic enlarged cross-sectional side view of a portion of the keyboard device at the use position.
FIG. 4B is a cross-sectional side view of a predetermined keycap shown in FIG. 4A in a pressed state.
FIG. 5 is a plan view of a bottom sheet to which conductive pads are fixed, as viewed from an upper surface side.
FIG. 6 is a bottom view of the bottom sheet shown in FIG. 5 from a lower surface side.
FIG. 7 is a schematic cross-sectional side view of the keyboard device according to a configuration example in which an opening portion is formed in the bottom sheet, showing the keycap in a pressed state.
FIG. 8A is a schematic enlarged cross-sectional side view of a portion of the keyboard device including a rubber dome according to a first configuration example.
FIG. 8B is a cross-sectional side view of the predetermined keycap shown in FIG. 8A in a pressed state.
FIG. 9 is a schematic enlarged cross-sectional side view of a portion of a keyboard device including a rubber dome according to a second configuration example.
FIG. 10 is a schematic enlarged cross-sectional side view of a portion of a keyboard device including a rubber dome according to a third configuration example.

### DETAILED DESCRIPTION OF THE INVENTION

Hereinafter, preferred embodiments of a keyboard device and an information apparatus system according to an aspect of the present invention will be described in detail with reference to the accompanying drawings.

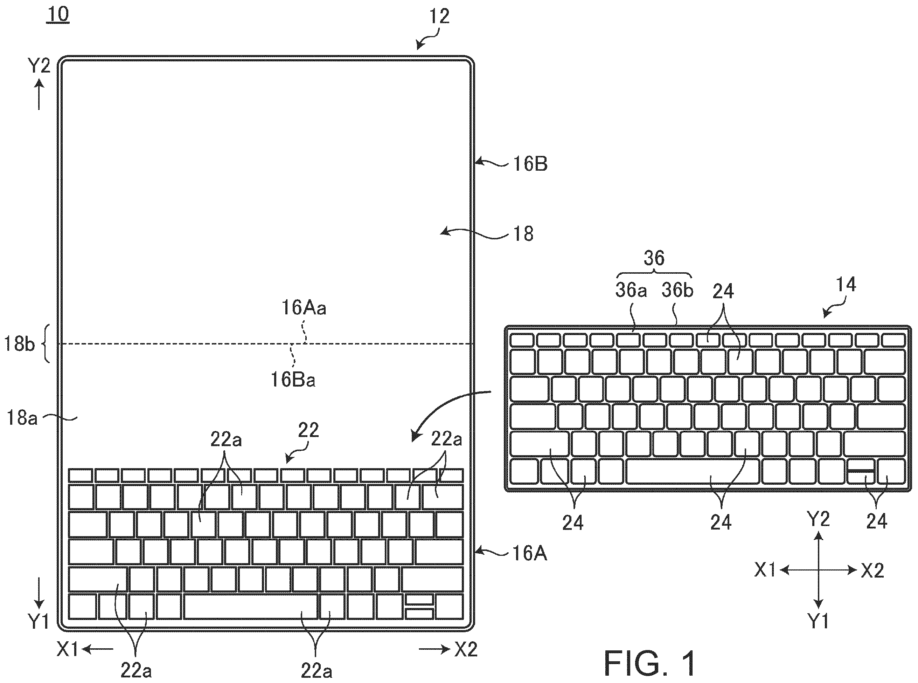

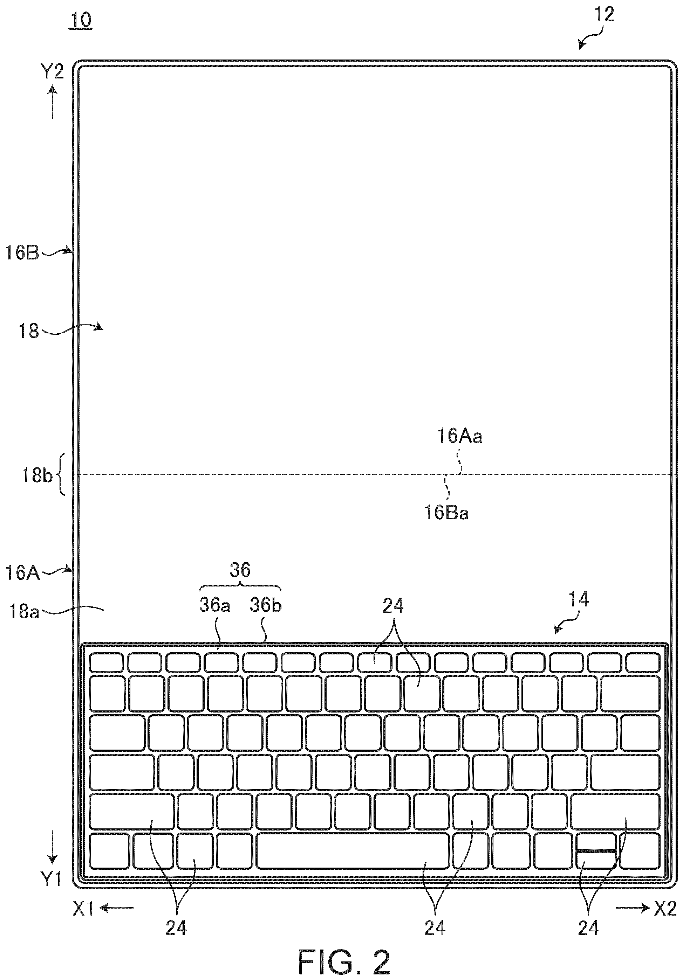

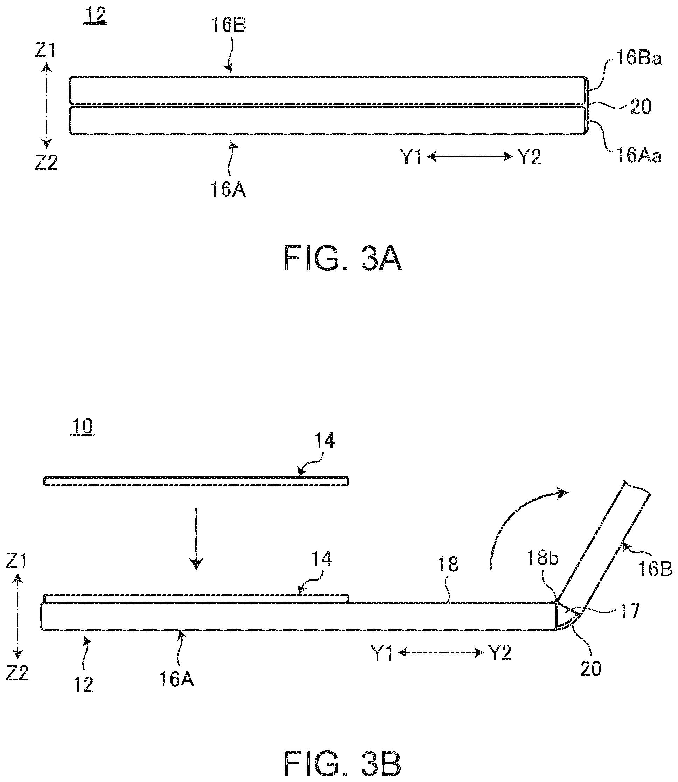

FIG. 1 is a configuration diagram of an information apparatus system 10 according to an embodiment. FIG. 1 shows a state before a keyboard device 14 is placed on an information apparatus 12. FIG. 2 is a schematic plan view of the information apparatus system 10 in which the keyboard device 14 is placed on the information apparatus 12. FIG. 3A is a schematic side view of the information apparatus 12 in closed storage mode. FIG. 3B is a side view of the information apparatus 12 shown in FIG. 3A in an open laptop mode, with the keyboard device 14 placed thereon.

As shown in FIGS. 1 to 3B, the information apparatus system 10 of the present embodiment includes the information apparatus 12 and the keyboard device 14. The keyboard device 14 is an auxiliary device for improving the operability of the input operation to the information apparatus 12. The information apparatus system 10 can also include other input devices other than the keyboard device 14, for example, a digitizer pen.

First, a configuration example of the information apparatus 12 will be described.

The information apparatus 12 includes a first chassis 16A, a second chassis 16B, a hinge device 17, and a touch screen 18. The information apparatus 12 of the present embodiment is a personal computer that can be folded like a book, and can be used as a laptop PC or a tablet PC. The information apparatus 12 may be a tablet PC (tablet terminal), a portable game machine including a single plate-shaped touch screen, or the like. The information apparatus 12 may, for example, be a dual-screen structure with a touch screen in each of two chassis that are rotatably connected by a hinge device.

The chassis 16A and 16B are rectangular flattened boxes. The chassis 16A and 16B each have a standing wall formed at an outer edge of a bottom plate, and the touch screen 18 is disposed on an open upper surface. The chassis 16A and 16B can be made of, for example, a metal plate such as stainless steel, magnesium, or aluminum, or a fiber reinforced resin plate. For example, various electronic components, a cooling device, and the like can be accommodated in each of the chassis 16A and 16B, in addition to a substrate on which various semiconductor chips and the like are mounted, a battery device, and an antenna device.

The chassis 16A and 16B are disposed adjacent to each other. The chassis 16A and 16B are connected to each other by the hinge device 17 provided at a position across one edge portions 16Aa and 16Ba which are adjacent edge portions to each other (see FIG. 3B). The hinge device 17 connects the one edge portions 16Aa and 16Ba to each other to be relatively rotatable. Accordingly, the information apparatus 12 is opened and closed like a book with the first chassis 16A and the second chassis 16B.

The chassis 16A and 16B can be set at a desired angle between the 0-degree posture shown in FIG. 3A and the 180-degree posture shown in FIG. 1. The information apparatus 12 has a compact form in which the touch screen 18 is housed inside in the 0-degree posture shown in FIG. 3A (storage mode), and thus, it is easy to carry or store the information apparatus 12 in a bag or the like. In a state in which the information apparatus 12 is set at approximately 90 degrees to 140 degrees between the chassis 16A and 16B as shown in FIG. 3B, the information apparatus 12 can be used in the same manner as a general laptop PC (laptop mode). The information apparatus 12 can be used as a tablet device with a large screen (tablet mode), with the touch screen 18 forming a large single plate in the 180-degree posture shown in FIGS. 1 and 2. Reference numerals 20 in FIGS. 3A and 3B are back cover members that cover a gap between the one edge portions 16Aa and 16Ba spaced apart from each other in the storage mode or the laptop mode.

Hereinafter, as shown in FIGS. 1 to 3B, the information apparatus 12 is described below by referring to the width direction of each chassis 16A and 16B as X1 and X2 directions, the alignment direction of the chassis 16A and 16B orthogonal to X1 and X2 directions as Y1 and Y2 directions, and the thickness direction of the chassis 16A and 16B as Z1 and Z2 directions. The keyboard device 14 is also referred to as X1 and X2 directions, and the like in the same manner as the information apparatus 12 with reference to a state (see FIGS. 2 and 3B) in which the keyboard device 14 is placed on the information apparatus 12. The X1 and X2 directions may be collectively referred to as an X direction, and the Y1 and Y2 directions and the Z1 and Z2 directions may be similarly referred to as a Y direction and a Z direction.

The touch screen 18 can be configured with an organic light emitting diode (OLED) on which a capacitive touch panel is laminated. Therefore, the touch screen 18 functions as an input device capable of detecting a touch position from a slight change in electrostatic capacitance generated between a finger and the touch panel. A touch operation can be performed on an upper surface 18a, which is a display surface, of the touch screen 18.

The touch screen 18 is composed of a flexible display having a paper-like shape with high flexibility, and can be bent with a rotational movement between the chassis 16A and 16B. That is, the touch screen 18 can continuously cover the upper surfaces of the first chassis 16A and the second chassis 16B and can be opened and closed in accordance with the opening and closing operations of the chassis 16A and 16B. The touch screen 18 has a region spanning the hinge device 17, specifically, a band-shaped region extending in the X direction along one edge portions 16Aa and 16Ba, which becomes a bending region 18b that bends during rotation between the chassis 16A and 16B (see FIG. 3B). The touch screen 18 may not be composed of a flexible display when the information apparatus 12 is not a foldable structure or the like.

As shown in FIG. 1, the information apparatus 12 can display a screen keyboard 22 on the touch screen 18. The screen keyboard 22 is also referred to as a software keyboard, and is a virtual keyboard device that allows typing by a touch operation on the touch screen 18. The screen keyboard 22 is composed of a plurality of keys 22a arranged in the same manner as a general keyboard device. The screen keyboard 22 can be operated in the same manner as a general keyboard device by receiving a touch operation for each key 22a.

FIG. 1 illustrates a state in which the screen keyboard 22 is displayed at a position close to the Y1 side of a region on the first chassis 16A side in the upper surface 18a of the touch screen 18. The display position, the display range, the key disposition, and the like of the screen keyboard 22 are not limited to those shown in FIG. 1. That is, the information apparatus 12 can also display the screen keyboard 22 at any position within the display region of the touch screen 18.

Next, the keyboard device 14 that is used in combination with the information apparatus 12 will be described.

As shown in FIGS. 1, 2, and 3B, the keyboard device 14 is used by being placed on the upper surface 18a of the touch screen 18. The keyboard device 14 assists an input operation to the screen keyboard 22 displayed on the touch screen 18. The keyboard device 14 allows the touch operation of each key 22a on the screen keyboard 22 displayed directly beneath each keycap 24 by physically pressing down on each keycap 24. Accordingly, the keyboard device 14 realizes comfortable typing on the screen keyboard 22.

FIG. 2 shows a state in which the keyboard device 14 is placed on the screen keyboard 22 displayed on the touch screen 18. It is preferable that the arrangement of the respective keycaps 24 of the keyboard device 14 matches the arrangement of the respective keys 22a of the screen keyboard 22. Accordingly, when the keyboard device 14 is placed on the screen keyboard 22, the key 22a having the same function as the keycap 24 is disposed directly beneath each keycap 24. Hereinafter, a state in which the keyboard device 14 is placed at an appropriate position on the screen keyboard 22 in this way is referred to as a use position.

The keyboard device 14 has a width dimension in the X direction that is slightly smaller than the chassis 16A and 16B in plan view and a width dimension in the Y direction that is slightly larger than a width dimension of a short side (Y direction) of the screen keyboard 22. Accordingly, the keyboard device 14 at the use position is disposed such that the keyboard device 14 covers the screen keyboard 22 with substantially the same outer shape. The keyboard device 14 may be configured to be positioned at the use position by, for example, magnets embedded at respective positions on outer edges of the chassis 16A and 16B. The keyboard device 14 may be configured to be positioned at the use position by, for example, a rubber material for slip prevention disposed at respective positions on outer edges of the bottom surface of the keyboard device 14.

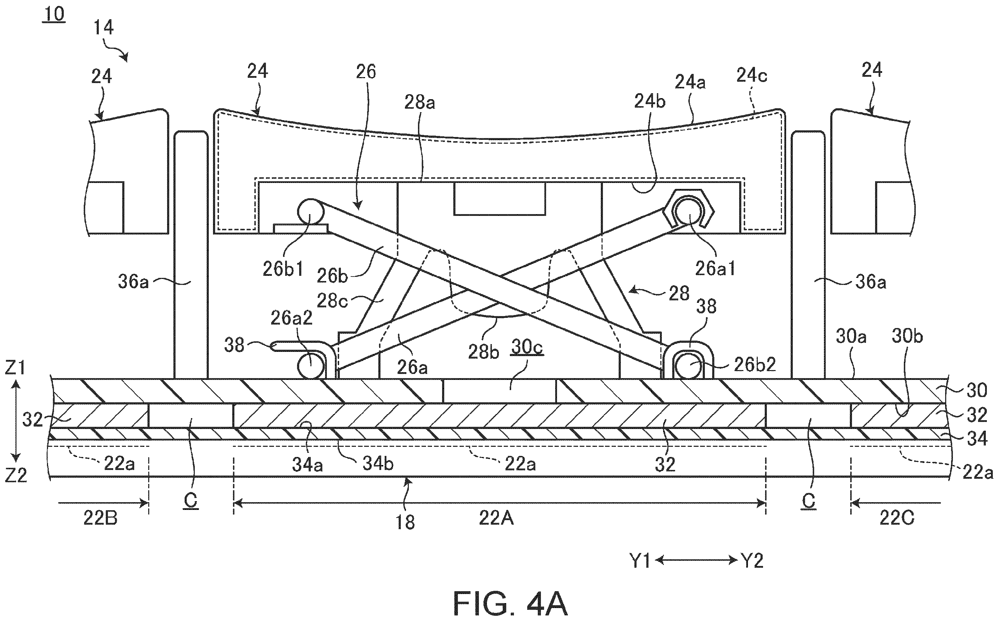

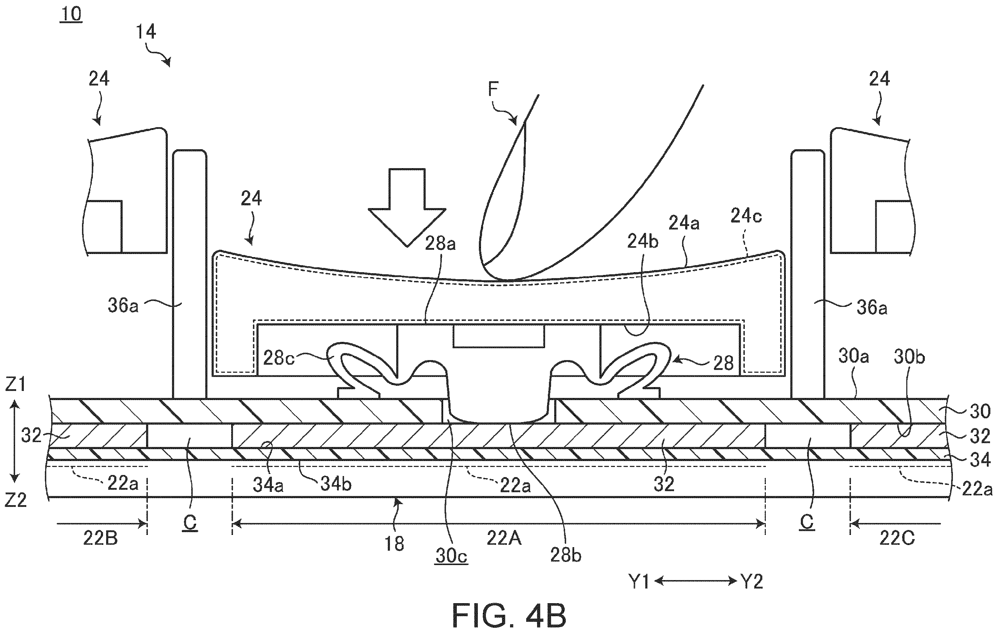

FIG. 4A is a schematic enlarged cross-sectional side view of a portion of the keyboard device 14 at the use position. FIG. 4B is a cross-sectional side view showing a state in which the predetermined keycap 24 shown in FIG. 4A is pressed. In FIG. 4B, the scissors mechanism 26 is not shown.

As shown in FIGS. 2, 4A, and 4B, the keyboard device 14 can include a plurality of keycaps 24, a plurality of scissors mechanisms 26, a plurality of rubber domes 28, a support plate 30, a plurality of conductive pads 32, a bottom sheet 34, and a frame member 36. As described above, the keyboard device 14 is an auxiliary input device that touches the key 22a of the screen keyboard 22 via the pressed keycap 24. Therefore, the keyboard device 14 can be configured not to have a battery, a membrane switch, a wireless module, and the like as in a general keyboard device.

The keycap 24 is an operation plate that is directly operated by an operator. The keycap 24 has conductivity between at least an operation surface (front surface) 24a and a back surface 24b. The keycap 24 is molded of, for example, a resin, and the entire outer surface thereof is subjected to metal plating 24c to secure conductivity between the operating surface 24a and the back surface 24b. The metal plating 24c can be formed by, for example, vapor deposition of stainless steel (SUS) or nickel. The entire keycap 24 may be molded of a conductive material.

The scissors mechanism 26 is a guide mechanism that supports the keycap 24 to be vertically movable on the upper surface 30a side of the support plate 30. The scissors mechanism 26 is installed one by one directly beneath each keycap 24. A plurality of scissors mechanisms 26 can also be installed for a large keycap 24 such as a space key.

The scissors mechanism 26 can be configured with an inner frame 26a and an outer frame 26b that forms a pair with the inner frame 26a. The inner frame 26a and the outer frame 26b are attached in a crisscross manner and function as a pantograph that guides the keycap 24 to be vertically movable on the support plate 30. An opening through which the rubber dome 28 is disposed is formed on an inner periphery of the inner frame 26a. The inner frame 26a can have a pair of left and right fixed shafts 26a1 that are pivotally supported on the back surface 24b side of the keycap 24, and a pair of left and right movable shafts 26a2 that are slidably supported on the upper surface 30a side of the support plate 30. The outer frame 26b can have a pair of left and right movable shafts 26b1 that are slidably supported on the back surface 24b side of the keycap 24, and a pair of left and right fixed shafts 26b2 that are pivotally supported on the upper surface 30a side of the support plate 30.

The rubber dome 28 is provided between the upper surface 30a of the support plate 30 and the back surface 24b of each keycap 24. One rubber dome 28 is installed inside each scissors mechanism 26. The rubber dome 28 is an elastic member that establishes electrical connection between the keycap 24 and the conductive pad 32 when the keycap 24 is pressed, and returns the keycap 24 to an original position when the pressing of the keycap 24 is released.

The rubber dome 28 can have a contact portion 28a, a pressing portion 28b, and a leg portion 28c. The rubber dome 28 has a substantially frustum shape as a whole.

The contact portion 28a forms an upper surface of the rubber dome 28 and is a portion that comes into contact with the back surface 24b of the keycap 24. The contact portion 28a can be formed of a donut-shaped surface having a recessed portion at the center in plan view in order to enhance the adhesiveness to the back surface 24b. The contact portion 28a may be formed of a disk-shaped flat surface having no recessed portion. The pressing portion 28b is a portion that presses the conductive pad 32. The pressing portion 28b is provided coaxially below the contact portion 28a. The pressing portion 28b has, for example, a downwardly tapered frustum shape or a cylindrical shape.

The leg portion 28c is an elastically deformable portion for vertically moving the contact portion 28a and the pressing portion 28b. The leg portion 28c has a skirt shape that forms an outer peripheral surface of the rubber dome 28, and is supported and stands upright on the upper surface 30a of the support plate 30. Accordingly, the leg portion 28c is compressed and crushed when the keycap 24 is pressed, and the contact portion 28a and the pressing portion 28b are moved downward. When the pressing of the keycap 24 is released, the leg portion 28c returns to the original shape by the elastic force thereof and pushes up the contact portion 28a and the pressing portion 28b to raise the keycap 24.

In the rubber dome 28, at least the contact portion 28a and the pressing portion 28b have conductivity, and the contact portion 28a and the pressing portion 28b are in electrical connection with each other. The rubber dome 28 can be integrally molded from the contact portion 28a to the pressing portion 28b, for example, with conductive silicone rubber to which a conductive filler is added. As a result, electrical connection between the contact portion 28a and the pressing portion 28b is secured. The leg portion 28c is not required to be conductive. The entire rubber dome 28 including the leg portion 28c may be molded of conductive silicone rubber.

The support plate 30 is an attachment plate of each scissors mechanism 26 and each rubber dome 28. The support plate 30 is a thin plate formed of a material having insulating properties. A plate thickness of the support plate 30 is, for example, 0.2 mm. The support plate 30 can be formed of, for example, flame retardant type 4 (FR4) which is a material obtained by impregnating glass fibers with an epoxy resin and curing the epoxy resin. The plate made of FR4 is a material generally used for a printed substrate, and has high strength, light weight, and insulating properties.

The upper surface 30a of the support plate 30 serves as a support surface for the scissors mechanism 26 and the rubber dome 28. A shaft support portion 38 that supports the shafts 26a2 and 26b2 is appropriately provided on the upper surface 30a in a protruding manner. The lower surface 30b of the support plate 30 is an installation surface of the conductive pad 32 or the bottom sheet 34. The support plate 30 has a through hole 30c directly beneath each keycap 24. One through hole 30c is installed directly beneath each rubber dome 28. The through hole 30c is a hole portion having an inner diameter into which the pressing portion 28b of the rubber dome 28 can be inserted, and is, for example, circular.

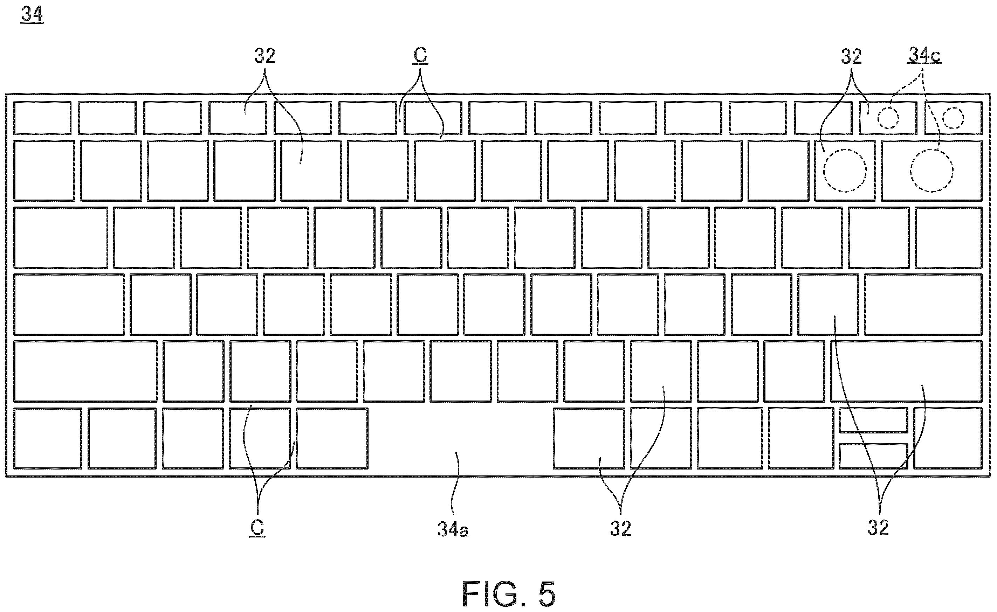

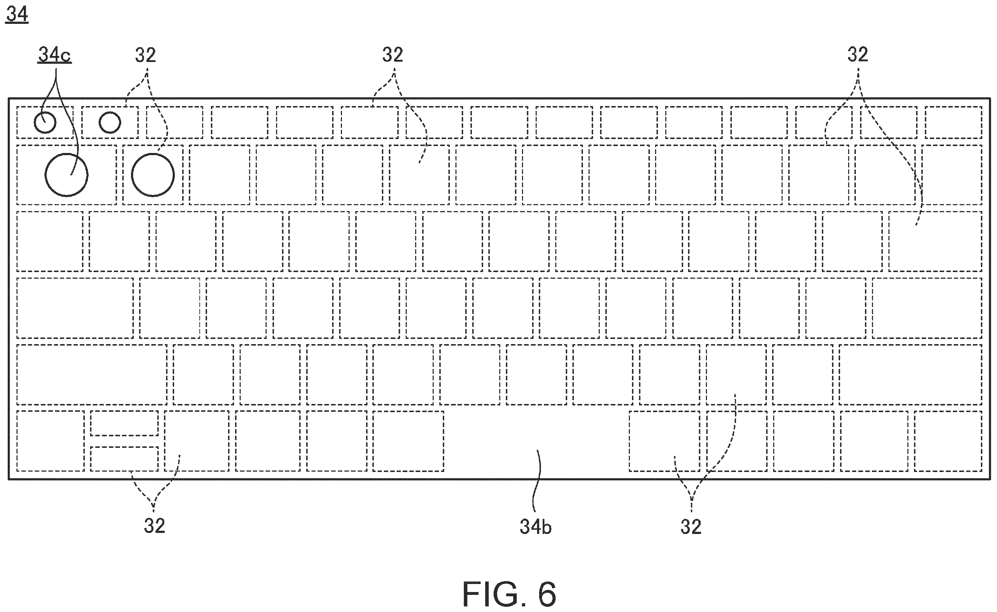

FIG. 5 is a plan view of the bottom sheet 34 to which the conductive pad 32 is fixed, as viewed from the upper surface 34a side. FIG. 6 is a bottom view of the bottom sheet 34 shown in FIG. 5 as viewed from the lower surface 34b side.

As shown in FIGS. 4A to 6, a plurality of conductive pads 32 are provided on the lower surface 30b side of the support plate 30 to cover the respective through holes 30c. One conductive pad 32 covers one through hole 30c. The conductive pad 32 is, for example, a thin metal foil formed of a highly conductive metal such as copper or aluminum. The thickness of the conductive pad 32 is, for example, 0.2 mm.

When the keyboard device 14 is at the use position, each conductive pad 32 is in electrical connection with each key 22a of the screen keyboard 22. The conductive pads 32 are installed one by one directly beneath each rubber dome 28. The conductive pads 32 and 32 adjacent to each other are isolated from each other. For example, the respective conductive pads 32 are arranged with a predetermined gap C therebetween to be isolated from each other. It is preferable that the size of each conductive pad 32 is the same as or slightly smaller than the outer shape of the key 22a to be electrically connected. Accordingly, each conductive pad 32 can be in electrical connection with a large surface area of each key 22a in a state in which the conductive pads 32 are reliably isolated from each other. It is preferable that the sizes of the respective conductive pads 32 are uniform with each other regardless of the size of the key 22a to be electrically connected. More specifically, it is preferable that the size of the conductive pad 32 is uniform at least for each type of the key 22a to be electrically connected (for example, a function key, an alphanumeric key, a cursor key, and the like). As a result, the magnitude of the signal transmitted between each conductive pad 32 and each key 22a is uniform, and the touch operation on the screen keyboard 22 is more stable. For example, the key 22a directly beneath the keycap 24 at the center in FIG. 4A is referred to as "key 22A", and left and right keys 22a adjacent to the key 22A are respectively referred to as "keys 22B and 22C". In this case, the conductive pad 32 to be in electrical connection with the key 22A is isolated from adjacent conductive pads 32 and 32 to be in electrical connection with the keys 22B and 22C by the gap C.

Each conductive pad 32 is adhesively fixed and positioned on the upper surface 34a of the bottom sheet 34 in an arrangement corresponding to the arrangement of the keys 22a (keycaps 24). Each conductive pad 32 can also be fixed to the lower surface 30b of the support plate 30 by adhesion or the like.

As shown in FIGS. 4A to 6, the bottom sheet 34 forms a bottom surface of the keyboard device 14. The bottom sheet 34 is a thin sheet-like member formed of a material having insulating properties. The bottom sheet 34 is, for example, a resin sheet made of a material such as polyethylene terephthalate (PET), and a resin sheet called MYLAR (registered trademark) can also be used. The thickness of the bottom sheet 34 is, for example, 0.1 mm.

The bottom sheet 34 is fixed to the lower surface 30b of the support plate 30 by adhesion or the like, and the conductive pad 32 is interposed between the bottom sheet 34 and the lower surface 30b. As a result, the bottom sheet 34 can prevent the conductive pads 32 from being exposed on the bottom surface of the keyboard device 14. The shape of the bottom sheet 34 can be formed to be substantially the same as the shape of the support plate 30 in plan view. As a result, the bottom sheet 34 can cover the entire lower surface 30b.

The bottom sheet 34 allows electrical connection between each conductive pad 32 and each key 22a of the screen keyboard 22 in a state in which the conductive pads 32 are isolated from each other. As described above, the bottom sheet 34 is a thin sheet-like member having insulating properties. Accordingly, the bottom sheet 34 can maintain an isolated state between the conductive pads 32.

In addition, the screen keyboard 22 is configured with a capacitive touch panel, and the bottom sheet 34 is a thin insulating film located between the conductive pad 32 and the touch screen 18. The thin bottom sheet 34, which forms the bottom surface of the keyboard device 14, thus becomes a portion of the capacitor formed here by passing the AC voltage applied when the keycap 24 is pressed and the operator's fingertip F and the conductive pad 32 are in electrical connection with each other, as described below. Therefore, even in a state in which the bottom sheet 34 having insulating properties is provided on the bottom surface of the keyboard device 14, the information apparatus 12 can detect a change in electrostatic capacitance generated between the conductive pad 32 and the key 22a and receive the touch operation of the screen keyboard 22. Therefore, the thickness of the bottom sheet 34 having insulating properties needs to be thin to the extent that detection of the touch operation by the capacitive touch screen 18 is not hindered. Therefore, in the present embodiment, the thickness of the bottom sheet 34 is set to, for example, 0.1 mm as described above.

As shown in FIGS. 1, 2, and 4A, the frame member 36 is a member that constitutes a chassis of the keyboard device 14. The frame member 36 is, for example, a molded component made of a resin material having insulating properties. The frame member 36 can have an isolation frame 36a and an outer peripheral frame 36b.

The isolation frame 36a forms the upper surface of the keyboard device 14 together with each keycap 24. The isolation frame 36a functions as a partition wall that partitions the adjacent keycaps 24 and 24 from each other. The isolation frame 36a is formed in a mesh shape, and the keycap 24 is disposed to be vertically movable inside each mesh. The isolation frame 36a can also be omitted. The outer peripheral frame 36b is a standing wall that forms an outer peripheral side surface of the keyboard device 14. The outer peripheral frame 36b is formed to stand upright to a Z2 side from the outer peripheral edge portion of the isolation frame 36a. On the inner side of the outer peripheral frame 36b, the support plate 30 that supports the keycap 24, the scissors mechanism 26, and the rubber dome 28, and the conductive pads 32 and the bottom sheet 34 that are laminated on the lower surface 30b side of the support plate 30 are accommodated.

Next, the operation of the keyboard device 14 will be mainly described with respect to the operation of the information apparatus system 10.

In the information apparatus 12, it is possible to use the keyboard device 14 in a laptop mode (refer to FIG. 3B) or a tablet mode (refer to FIG. 2). For example, in the laptop mode, the keyboard device 14 is placed at a use position on the upper surface 18a of the touch screen 18 on the first chassis 16A side placed on the desk. In the keyboard device 14 at the use position, each keycap 24 of the corresponding key type is disposed on each key 22a of the screen keyboard 22, and the conductive pad 32 beneath the keycap 24 is in electrical connection with each key 22a.

First, in a state in which the keycap 24 is not pressed, the keyboard device 14 is at a position at which the keycap 24 is most raised to the Z1 side by the biasing force of the rubber dome 28, as shown in FIG. 4A. In this case, the keycap 24 having conductivity and the rubber dome 28 are in electrical connection with each other. On the other hand, the pressing portion 28b of the rubber dome 28 is located above the through hole 30c of the support plate 30. That is, the pressing portion 28b is separated from the conductive pad 32, and the pressing portion 28b and the conductive pad 32 are not in electrical connection with each other. Therefore, in the keyboard device 14, no input (touch operation) is performed on the keys 22a of the screen keyboard 22 displayed on the touch screen 18.

Next, when inputting to the screen keyboard 22, for example, a predetermined keycap 24 is pressed by the fingertip F as shown in FIG. 4B. In this case, the keycap 24 is moved downward (Z2 direction) under the guide action of the scissors mechanism 26, and the rubber dome 28 is compressed and crushed. As a result, the pressing portion 28b of the rubber dome 28 is inserted into the through hole 30c and comes into contact with the conductive pad 32 directly beneath the through hole 30c. As a result, in the keyboard device 14, the fingertip F is in electrical connection with the conductive pad 32 through the conductive keycap 24 and the rubber dome 28, and an input (touch operation) to the key 22a of the screen keyboard 22 is executed. In this case, the conductive pads 32 are isolated from each other. Therefore, other keys 22a, for example, adjacent keys 22B and 22C other than the key 22A of the operation target are not erroneously touched.

As described above, the keyboard device 14 of the present embodiment is used for providing an input to the screen keyboard 22 that displays the plurality of keys 22a on the capacitive touch screen 18. The keyboard device 14 includes the plurality of conductive keycaps 24, the scissors mechanisms 26 respectively provided directly beneath the respective keycaps 24, and the insulating support plate 30 having respective through holes 30c directly beneath the respective keycaps 24 and supporting each scissors mechanism 26 on the upper surface 30a side. The keyboard device 14 includes the conductive contact portion 28a that comes into contact with the keycap 24, and the conductive pressing portion 28b that is in electrical connection with the contact portion 28a and passing through the through hole 30c when the keycap 24 is pressed, and includes the rubber domes 28 that are respectively provided between the respective keycaps 24 and the support plate 30. The keyboard device 14 includes the plurality of conductive pads 32 that are provided on the lower surface 30b side of the support plate 30 to respectively cover the respective through holes 30c in a state in which adjacent conductive pads are isolated from each other, and that are respectively able to be in electrical connection with the respective keys 22a of the screen keyboard 22.

Since the keyboard device 14 includes the vertically movable keycap 24 supported by the scissors mechanism 26 and the rubber dome 28, it is possible to type with a high degree of operability similar to that of a general physical keyboard device. On the other hand, in the keyboard device 14, the key 22a of the screen keyboard 22 is used for the key output to the information apparatus 12 when the keycap 24 is pressed. That is, the keyboard device 14 does not need to be equipped with components for key output, such as a battery, a membrane switch, and a wireless module. Therefore, the keyboard device 14 can be made significantly thinner and lighter as compared with a general keyboard device connected to an information apparatus in a wireless or wired manner. For example, the keyboard device 14 of the present embodiment can be configured such that the thickness in the Z direction is set to about 3 to 3.5 mm. That is, the information apparatus system 10 including the keyboard device 14 allows input to the information apparatus 12 with a comfortable typing touch using the physical keyboard device 14. Moreover, the keyboard device 14 can be easily carried together with the compact information apparatus 12, and can be easily stored in a bag or the like.

In particular, in the keyboard device 14, the conductive pads 32 having a large surface area equivalent to that of each key 22a of the screen keyboard 22 and having substantially the uniform size as each other are in electrical connection with each key 22a. Therefore, it is sufficient that the pressing portion 28b of the rubber dome 28 simply comes into contact with the conductive pads 32 to be in electrical connection with each other. As a result, the keyboard device 14 is less likely to cause poor contact with the touch screen 18, and can suppress the occurrence of input failure or erroneous input of the screen keyboard 22 when the keycap 24 is pressed.

That is, a case is considered in which the keyboard device 14 does not have the conductive pad 32 and the pressing portion 28b pressed by the keycap 24 directly touches the key 22a. The pressing portion 28b of the rubber dome 28 is located inside the scissors mechanism 26, and the periphery thereof is surrounded by the leg portion 28c so that the rubber dome 28 can be elastically displaced. Therefore, the pressing portion 28b has a small surface area of the pressing surface (distal end surface) and it is also difficult to increase the area. Therefore, the configuration in which the pressing portion 28b directly touches the keys 22a as described above is likely to cause poor contact with the minute electrodes of the touch screen 18, which can easily result in typing failure. In this regard, in the keyboard device 14 of the present embodiment, the conductive pad 32 having a wide surface area is in electrical connection with the key 22a. Therefore, in the keyboard device 14, if the pressing portion 28b can come into contact with the conductive pad 32 and be electrically connected, the keys 22a can be reliably touched, and thus typing failure is unlikely to occur.

It is preferable that the size of the conductive pad 32 in plan view is the same as or smaller than the size of the key 22a of the screen keyboard 22 in plan view. As the surface area of the conductive pad 32 increases, electrical connection failure with respect to the key 22a is less likely to occur. On the other hand, if the conductive pad 32 is too large, there is a concern that an adjacent key 22a is erroneously touched.

The keyboard device 14 can include the bottom sheet (sheet-like member) 34 that is provided on the lower surface 30b side of the support plate 30 and that sandwiches each conductive pad 32 between the bottom sheet 34 and the lower surface 30b. The bottom sheet 34 allows electrical connection between each conductive pad 32 and each key 22a in a state in which the conductive pads 32 are isolated from each other. In this case, the keyboard device 14 can prevent the conductive pads 32 formed of, for example, a metal foil and arranged in an island shape from being directly exposed on the bottom surface. As a result, the conductive pad 32 is prevented from rusting or peeling off. The bottom sheet 34 improves the design of the bottom surface of the keyboard device 14 and also prevents dust and dirt from entering from the bottom surface. Since the bottom sheet 34 can be attached to the support plate 30 in a state in which each conductive pad 32 is integrally fixed, the workability of the conductive pad 32 during assembly is also improved. An anisotropic conductive sheet having conductivity in the thickness direction and insulating properties in the plane direction can also be used as the bottom sheet 34.

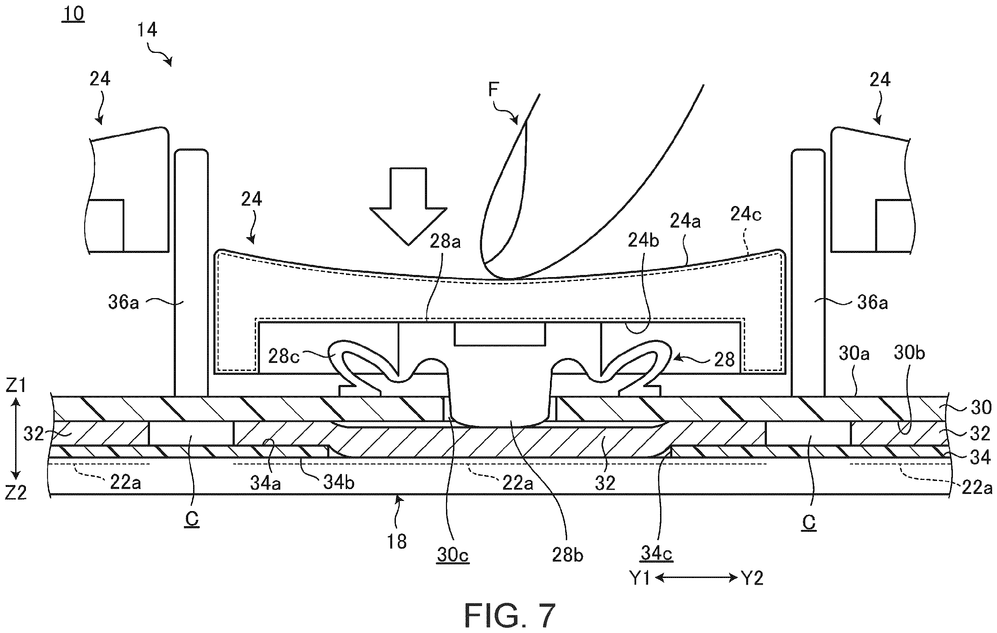

FIG. 7 is a schematic cross-sectional side view of the keyboard device 14 according to the configuration example in which the opening portion 34c is formed in the bottom sheet 34, showing the keycap 24 in a pressed state.

As shown in FIG. 7, the bottom sheet 34 can also be formed with the opening portion 34c penetrating at a position overlapping each conductive pad 32. The opening portion 34c is an opening having a diameter smaller than the outer shape of each conductive pad 32, as exemplarily shown at a position overlapping a portion of the conductive pads 32 in FIGS. 5 and 6. The diameter of the opening portion 34c is larger than the diameter of the pressing portion 28b of the rubber dome 28. Although the opening portion 34c is shown only at positions overlapping some of the conductive pads 32 in FIGS. 5 and 6, the opening portion 34c can be similarly provided directly beneath all the conductive pads 32. The opening portion 34c shown in FIGS. 5 and 6 is a round hole, but may be a rectangular or polygonal hole.

In the keyboard device 14 shown in FIG. 7, the opening portion 34c is provided in the bottom sheet 34 so that the conductive pad 32 is directly in contact with the upper surface 18a of the touch screen 18 when the keycap 24 is pressed. Therefore, in this configuration, the bottom sheet 34 only needs to have insulating properties, and the flow of the AC voltage in the thickness direction during the touch operation is not limited.

Next, another configuration example (rubber domes 28A, 28B, and 28C) of the rubber dome 28 will be described.

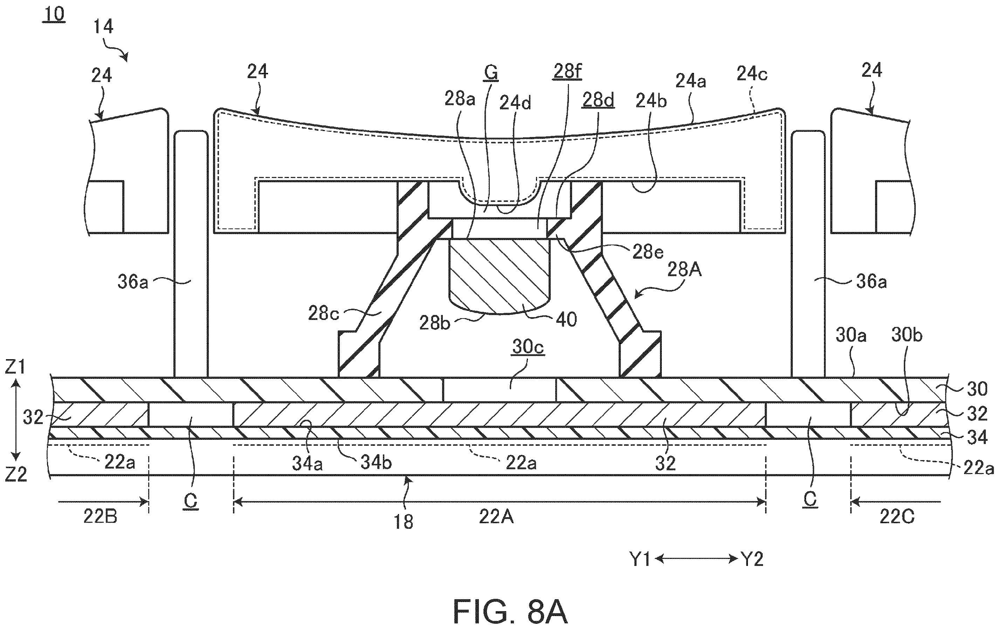

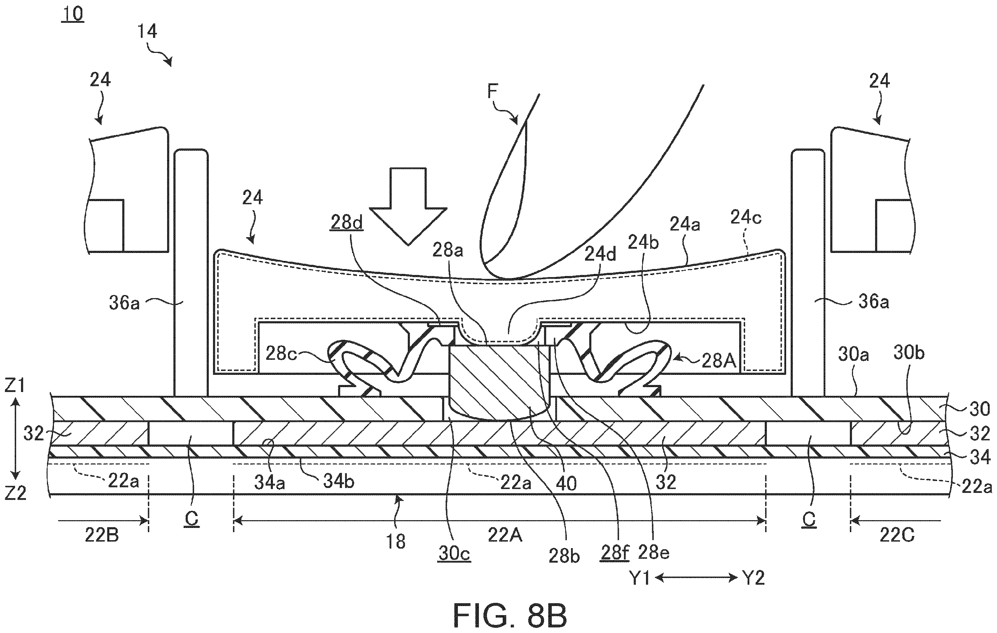

FIG. 8A is a schematic enlarged cross-sectional side view of a portion of the keyboard device 14 including the rubber dome 28A according to a first configuration example. FIG. 8B is a cross-sectional side view showing a state in which the predetermined keycap 24 shown in FIG. 8A is pressed. In FIGS. 8A to 10, the scissors mechanism 26 is not shown.

The rubber dome 28A shown in FIGS. 8A and 8B has the contact portion 28a and the pressing portion 28b formed of a conductive material 40, and the leg portion 28c formed of a non-conductive rubber material.

The conductive material 40 is, for example, a rubber material to which a conductive filler is added. The conductive material 40 of the present embodiment is silicone rubber to which a conductive filler is added. Examples of the conductive filler include metal powder and carbon black. Examples of the metal powder include powders of silver, copper, aluminum, nickel, and the like.

The rubber dome 28A is integrally molded with the contact portion 28a and the pressing portion 28b by the same conductive material 40. As a result, electrical connection between the contact portion 28a and the pressing portion 28b is secured. The conductive material 40 is molded into, for example, a substantially cylindrical shape as a whole. In the conductive material 40, the upper surface (Z1 side surface) is the contact portion 28a, and the lower surface (Z2 side surface) is the pressing portion 28b. The contact portion 28a and the pressing portion 28b may be formed separately and may be formed integrally with each other by an adhesive or the like.

The leg portion 28c of the rubber dome 28A is formed of a non-conductive rubber material. The leg portion 28c of the present embodiment is made of silicone rubber. That is, the rubber dome 28A is formed of a rubber material to which the above-described conductive filler is not added. In general, the flexibility of a rubber material is reduced if a conductive filler is added. The leg portion 28c needs to be flexibly compressed when the keycap 24 is pressed. This is to make the operability of the keycap 24 smooth. On the other hand, the contact portion 28a and the pressing portion 28b do not need the flexibility as much as the leg portion 28c. Therefore, in the rubber dome 28A, the contact portion 28a and the pressing portion 28b are formed of the conductive material 40, and the leg portion 28c is formed of a non-conductive rubber material. Accordingly, the rubber dome 28A can achieve both flexibility and electrical connection between the contact portion 28a and the pressing portion 28b.

The contact portion 28a of the rubber dome 28 shown in FIG. 4A and the like was always in contact with the back surface 24b of the keycap 24. On the other hand, the contact portion 28a of the rubber dome 28A shown in FIG. 8A can be located at a position separated from the back surface 24b in a state in which the keycap 24 is not pressed. The contact portion 28a of the rubber dome 28A has a gap G with the back surface 24b.

Specifically, the contact portion 28a is located below a bottom plate 28e of a recessed portion 28d that is recessed on the upper surface of the rubber dome 28A. The bottom plate 28e is integrally molded with, for example, the leg portion 28c. A hole portion 28f that penetrates the bottom plate 28e in the Z direction is formed in the bottom plate 28e. The contact portion 28a is fixed to the lower surface of the bottom plate 28e and is exposed inside the hole portion 28f. A protruding portion 24d that protrudes downward is formed on the back surface 24b of the keycap 24. The protruding portion 24d has an outer diameter that can be inserted into the hole portion 28f and a height that allows the protruding portion 24d to be in contact with the contact portion 28a through the hole portion 28f. The metal plating 24c is also applied to the front surface of the protruding portion 24d.

As shown in FIG. 8B, if the keycap 24 is pressed and the keycap 24 is moved downward under the guide action of the scissors mechanism 26, the rubber dome 28A is particularly smoothly compressed and crushed at the leg portion 28c. In this case, the protruding portion 24d of the keycap 24 comes into contact with the contact portion 28a through the hole portion 28f. As a result, the keycap 24 is in electrical connection with the contact portion 28a and the pressing portion 28b. Further, the pressing portion 28b of the rubber dome 28A comes into contact with the conductive pad 32 through the through hole 30c. As a result, even in the keyboard device 14 including the rubber dome 28A, the fingertip F is in electrical connection with the conductive pad 32, and an input (touch operation) to the key 22a of the screen keyboard 22 can be executed.

In the rubber dome 28A, the contact portion 28a has the gap G with the keycap 24. As described above, in addition to the gap between the pressing portion 28b and the conductive pad 32, the rubber dome 28A has the gap G with the keycap 24. Therefore, in the keyboard device 14 including the rubber dome 28A, for example, even when the keycap 24 is lightly pressed without an intention of a pressing operation, electrical connection between the keycap 24 and the contact portion 28a is unlikely to occur. As a result, the rubber dome 28A can more reliably suppress the unintentional touch operation of the key 22a.

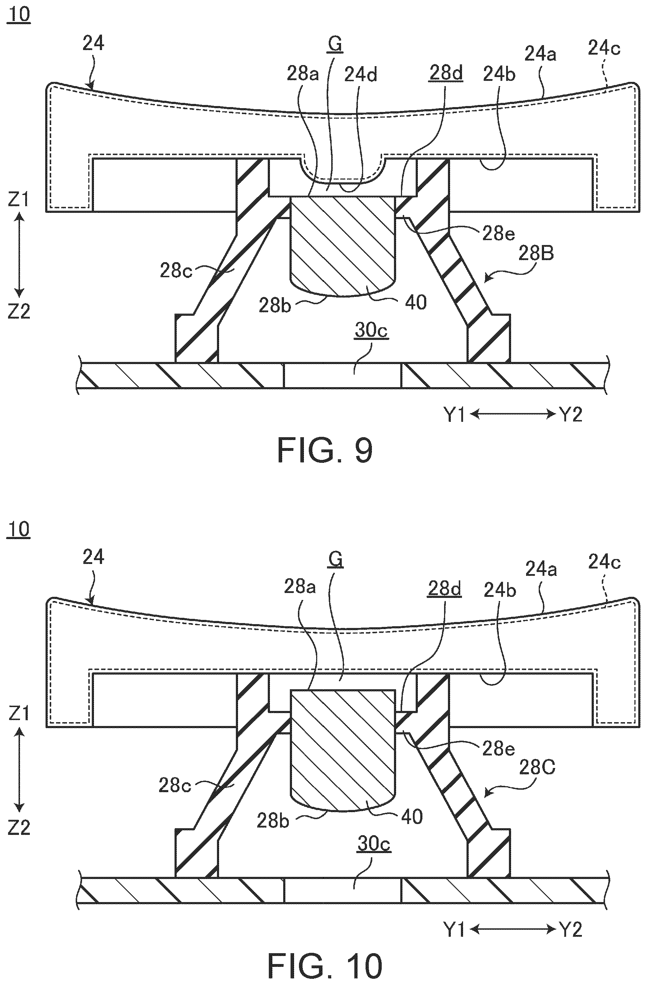

FIG. 9 is a schematic enlarged cross-sectional side view of a portion of the keyboard device 14 including the rubber dome 28B according to a second configuration example. The rubber dome 28B shown in FIG. 9 has a configuration in which the hole portion 28f is substantially filled with the conductive material 40, as compared with the rubber dome 28A shown in FIGS. 8A and 8B. In the rubber dome 28B, the contact portion 28a is exposed on the upper surface (Z1 side surface) of the bottom plate 28e. Therefore, if the keycap 24 is pressed in the rubber dome 28B, the protruding portion 24d of the keycap 24 comes into contact with the contact portion 28a to be in electrical connection with each other.

FIG. 10 is a schematic enlarged cross-sectional side view of a portion of the keyboard device 14 including the rubber dome 28C according to a third configuration example. The rubber dome 28C shown in FIG. 10 does not have the protruding portion 24d of the keycap 24, as compared with the rubber dome 28B shown in FIG. 9. In addition, the conductive material 40 is disposed to penetrate the bottom plate 28e, and the contact portion 28a is above (Z1 side) the upper surface (Z1 side surface) of the bottom plate 28e. Therefore, if the keycap 24 is pressed in the rubber dome 28C, the back surface 24b of the keycap 24 comes into contact with the contact portion 28a to be in electrical connection with each other.

The present invention is not limited to the above-described embodiments, and there is no doubt that the present invention can be freely changed without departing from the gist of the present invention.

### Description of Symbols

10 information apparatus system
12 information apparatus
14 keyboard device
16A first chassis
16B second chassis
18 touch screen
22 screen keyboard
22A to 22C, 22a key
24 keycap
24d protruding portion
26 scissors mechanism
28, 28A to 28C rubber dome
28a contact portion
28b pressing portion
28c leg portion
28f hole portion
30 support plate
30c through hole
32 conductive pad
34 bottom sheet
34c opening portion

## Claims

1. A keyboard device for providing an input to a screen keyboard displaying a plurality of keys on a capacitive touch screen, the device comprising:
a plurality of conductive keycaps;
scissors mechanisms respectively provided directly beneath the respective keycaps and configured to support the respective keycaps to be vertically movable;
an insulating support plate comprising respective through holes directly beneath the respective keycaps and configured to support each scissors mechanism on an upper surface side;
rubber domes respectively provided between the respective keycaps and the support plate, each rubber dome comprising a conductive contact portion contacting the keycap and a conductive pressing portion arranged to be in electrical connection with the contact portion and pass through the respective through hole when the respective keycap is pressed; and
a plurality of conductive pads provided on a lower surface side of the support plate to respectively cover the respective through holes in a state in which adjacent conductive pads are isolated from each other, and that are respectively able to be in electrical connection with the respective keys of the screen keyboard.

2. The keyboard device according to claim 1, further comprising:
a sheet-like member provided on the lower surface side of the support plate and configured to sandwich the plurality of conductive pads between the sheet-like member and a lower surface of the support plate, wherein
the sheet-like member is arranged to allow electrical connection between each conductive pad and each key of the screen keyboard in a state in which the respective conductive pads are isolated from each other.

3. The keyboard device according to claim 2, wherein the sheet-like member comprises an insulating resin sheet formed to a thickness arranged to allow electrical connection between each conductive pad and each key of the screen keyboard.

4. The keyboard device according to claim 2, wherein the sheet-like member comprises insulating properties and an opening portion at a position overlapping each conductive pad.

5. The keyboard device according to any one of claims 2 to 4, wherein
the conductive pads comprise metal foil fixed to the sheet-like member.

6. An information apparatus system, comprising:
an information apparatus comprising a capacitive touch screen capable of displaying a screen keyboard composed of a plurality of keys; and
a keyboard device placed on the touch screen for providing an input to the screen keyboard, wherein
the keyboard device comprises:
a plurality of conductive keycaps;
scissors mechanisms respectively provided directly beneath the respective keycaps and configured to support the respective keycaps to be vertically movable;
an insulating support plate comprising respective through holes directly beneath the respective keycaps and configured to support each respective scissors mechanism on an upper surface side;
rubber domes respectively provided between the respective keycaps and the support plate, each rubber dome comprising a conductive contact portion contacting the keycap and a conductive pressing portion arranged to be in electrical connection with the contact portion and pass through the through hole when the respective keycap is pressed; and
a plurality of conductive pads provided on a lower surface side of the support plate to respectively cover the respective through holes in a state in which adjacent conductive pads are isolated from each other, and that are respectively able to be in electrical connection with the respective keys of the screen keyboard.

7. The information apparatus system according to claim 6, wherein
a size of the conductive pad is the same as or smaller than a size of the key.

8. The information apparatus system according to claim 6 or 7, further comprising:
a sheet-like member provided on the lower surface side of the support plate and configured to sandwich the plurality of conductive pads between the sheet-like member and a lower surface of the support plate, wherein
the sheet-like member is arranged to allow electrical connection between each conductive pad and each key of the screen keyboard in a state in which the respective conductive pads are isolated from each other.

9. A keyboard device for providing an input to a screen keyboard displaying a plurality of keys on a capacitive touch screen, the device comprising:
a plurality of conductive keycaps;
scissors mechanisms respectively provided directly beneath the respective keycaps and configured to support the respective keycaps to be vertically movable;
an insulating support plate comprising respective through holes directly beneath the respective keycaps and configured to support each respective scissors mechanism on an upper surface side;
a plurality of rubber domes, each comprising a conductive contact portion capable of contacting the respective keycap, a conductive pressing portion arranged to be in electrical connection with the contact portion and pass through the through hole when the respective keycap is pressed, and a leg portion standing upright on the upper surface side of the support plate, in which the contact portion and the pressing portion are formed of a conductive material, and the leg portion is formed of a non-conductive rubber material; and
a plurality of conductive pads provided on a lower surface side of the support plate to respectively cover the respective through holes in a state in which adjacent conductive pads are isolated from each other, and that are respectively able to be in electrical connection with the respective keys of the screen keyboard.

10. The keyboard device according to claim 9, wherein
the conductive material forming the contact portion and the pressing portion comprises a rubber material to which a conductive filler is added.

11. The keyboard device according to claim 9 or 10, wherein
at least one contact portion is separated from at least one respective keycap in a state where the at least one respective keycap is not pressed.

12. The keyboard device according to claim 11, wherein
a protruding portion arranged to contact the contact portion when the keycap is pressed is provided on a back surface of at least one keycap.

13. The keyboard device according to claim 12, wherein
at least one rubber dome comprises a hole portion provided directly beneath the protruding portion, and
the protruding portion is arranged to contact the contact portion through the hole portion when the respective keycap is pressed.

14. An information apparatus system, comprising:
an information apparatus comprising a capacitive touch screen capable of displaying a screen keyboard composed of a plurality of keys; and
a keyboard device placed on the touch screen and providing an input to the screen keyboard, wherein
the keyboard device comprises:
a plurality of conductive keycaps;
scissors mechanisms respectively provided directly beneath the respective keycaps and configured to support the respective keycaps to be vertically movable;
an insulating support plate comprising respective through holes directly beneath the respective keycaps and configured to support each respective scissors mechanism on an upper surface side;
a plurality of rubber domes, each comprising a conductive contact portion capable of contacting the respective keycap, a conductive pressing portion arranged to be in electrical connection with the respective contact portion and pass through the through hole when the respective keycap is pressed, and a leg portion standing upright on the upper surface side of the support plate, in which the contact portion and the pressing portion are formed of a conductive material, and the leg portion is formed of a non-conductive rubber material; and
a plurality of conductive pads provided on a lower surface side of the support plate to respectively cover the respective through holes in a state in which adjacent conductive pads are isolated from each other, and that are respectively able to be in electrical connection with the respective keys of the screen keyboard.

15. The information apparatus system according to claim 14, wherein
the conductive material forming the contact portion and the pressing portion comprises a rubber material to which a conductive filler is added.
